Europäisches Patentamt

European Patent Office

Office européen des brevets

(19)

(11) Numéro de publication: **0 181 794**
**B1**

(12) # FASCICULE DE BREVET EUROPEEN

(45) Date de publication du fascicule du brevet:
**17.02.88**

(51) Int. Cl.⁴: **B 60 G 17/04**

(21) Numéro de dépôt: **85401974.2**

(22) Date de dépôt: **10.10.85**

(54) **Dispositif de changement d'assiette pour véhicule à suspension pneumatique, en particulier pour véhicule industriel destiné au transport des personnes.**

(30) Priorité: **19.10.84 FR 8416047**

(43) Date de publication de la demande:
**21.05.86 Bulletin 86/21**

(45) Mention de la délivrance du brevet:
**17.02.88 Bulletin 88/7**

(84) Etats contractants désignés:
**BE DE FR GB IT LU NL**

(56) Documents cités:
**DE - A - 2 604 809**
**DE - B - 1 122 386**
**FR - A - 2 125 217**
**FR - A - 2 152 351**
**FR - A - 2 526 723**
**US - A - 1 869 285**

(73) Titulaire: **RENAULT VEHICULES INDUSTRIELS Société Anonyme dite:, 129 rue Servient "La Part Dieu", F-69003 Lyon (FR)**

(72) Inventeur: **Fabreges, Michel, 26 rue Ludovic Bonin, F-69200 Venissieux (FR)**

ACTORUM AG

## Description

La présente invention se rapporte à un dispositif de changement de position d'assiete pour un véhicule à suspension pneumatique, en particulier pour un véhicule industriel destiné au transport des personnes (DE-A-2 604 908).

Dans les autobus urbains principalement, une préoccupation importante du concepteur consiste à faciliter l'accès des passagers, à leur montée et à leur descente du véhicule. Cela est obtenu par l'adoption d'un châssis peu encombrant en hauteur; cependant les limites mécaniques de construction ne permettent pratiquement pas d'obtenir le résultat souhaité sans recourir à l'affaissement et au relevage de la suspension du véhicule aux points d'arrêt de ce dernier.

On connaît déjà divers dispositifs permettant ce mode de fonctionnement.

Dans certains de ces dispositifs, la hauteur des coussins de la suspension pneumatique est réglée au moyen d'une valve de nivellement, constituée d'un distributeur à commande mécanique à trois positions. Deux positions stables de l'assiete du véhicule, haute et basse, sont associées à deux points neutres de ce distributeur, positions autour desquelles le distributeur assure la régulation de l'assiette.

Une variante de cette solution est utilisée dans d'autres dispositifs: le distributeur est alors monté sur une embase pivotante à plusieurs positions, ce qui permet de décaler la position neutre de la valve de nivellement par rapport au châssis du véhicule.

Dans d'autres dispositifs de changement de position d'assiette, la suspension du véhicule utilise en plus des coussins pneumatiques des réservoirs complémentaires, associés à ceux-ci. Le réservoir complémentaire est isolé du coussin par une valve qui permet de vidanger ce dernier dans l'atmosphère, la position basse étant ainsi obtenue par appui sur les butées de suspension.

Dans cette position, la valve de nivellement permet le remplissage du réservoir à la pression maximale du circuit; ainsi, lorsque la liaison réservoir-coussin est rétablie, le véhicule est rapidement relevé à sa position haute.

Les dispositifs connus présentent divers inconvénients. Pour les premiers cités, le faible débit ou l'amortissement de la valve de nivellement, nécessaire en position de roulage afin de réduire la consommation d'air, interdisent un abaissement ou un relevage rapide.

Pour les derniers cités, la vidange totale du coussin à l'abaissement est source de forte consommation d'air, et entraîne un accroissement du travail fourni par le compresseur du véhicule. Le remplissage du réservoir complémentaire en position basse prolongée est ensuite à l'origine d'un dépassement important de l'assiette route, ce qui est source à la fois d'inconfort et de surconsommation d'air. De plus, si le stationnement du véhicule en position basse est de courte durée, le relèvement de la suspension ne s'effectue que partiellement, ce qui peut être à l'origine d'avaries mécaniques graves.

La présente invention a pour objet un dispositif de changement d'assiette d'un véhicule à suspension pneumatique, permettant notamment le passage d'une hauteur de suspension haute à une hauteur de suspension correspondant à l'arrêt voyageurs, rapidement, sans pertes d'air dans les chambres de suspension et sans dépassement d'assiette de part et d'autre des deux positions prévues.

L'invention a également pour objet un dispositif applicable à toute suspension pneumatique de véhicule, avec ou sans réservoirs additionnels, utilisant des composants pneumatiques classiques, et ne nécessitant pas des mises au point ou réglages délicats.

Selon l'invention, le dispositif de changement de position d'assiette pour véhicule à suspension au moins partiellement pneumatique, cette suspension comportant au moins un coussin de suspension alimenté en air comprimé par l'intermédiaire d'une valve de nivelle, adaptée à réguler la position d'assiette du véhicule autour d'un point neutre et comprenant au moins un réservoir séparé en deux chambres par une cloison mobile et dont la première chambre est reliée audit coussin, est caractérisé en ce que la deuxième chambre est reliée à un distributeur adapté à la mettre en communication soit avec une source d'air comprimé dont la pression est suffisante pour faire réduire la première chambre à un volume minimal par déplacement de la cloison mobile, le coussin de suspension présentant alors un volume correspondant à la position normale de roulage du véhicule, soit avec l'atmosphère ou l'échappement, l'air contenu dans le coussin transitant alors en partie vers la première chambre et repoussant la cloison mobile en sens contraire jusqu'en fin de course, et en ce que la valve de nivellement comporte un dispositif de décalage de point neutre relié à la deuxième chambre par une canalisation de manière que la mise en pression de la chambre corresponde à un premier réglage du point neutre pour la position de roulage et que sa mise à l'air libre corresponde à un second réglage du point neutre pour la position basse ou d'arrêt qui est obtenue par l'abaissement de la pression consécutif au déplacement de la cloison mobile pour augmenter le volume de la première chambre.

L'invention prévoit également de compléter le dispositif par un ou plusieurs autres réservoirs supplémentaires permettant de conférer à la suspension une ou plusieurs autres positions. A cet effet, il comporte au moins un autre réservoir à cloison mobile analogue au premier cité et relié de même directement au coussin de suspension et à une source d'air comprimé par un autre distributeur, pour déplacer ledit coussin entre la position de roulage et une autre position de nivellement de suspension et le dispositif de décalage de point neutre est relié à la deuxième chambre dudit autre réservoir par une canalisation de façon que la mise en pression de ladite deuxième chambre corresponde à un troisième réglage de point neutre obtenu à la suite de la réduction de volume de la première chambre dudit autre réservoir tandis que la mise à l'échappement de ladite deuxième chambre correspond au réglage de la suspension par le réservoir.

La valve de nivellement est apte à laisser transiter à l'admission et respectivement à l'échappement un débit d'air comprimé qui est ajusté au voisinage du minimum compatible avec la régulation de hauteur nécessaire au cours du roulage du véhicule tandis que la liaison entre le coussin de suspension et la première chambre est réalisée par un passage de section importante compatible avec les débits à laisser transiter entre la première chambre et le coussin de suspension.

Selon un autre mode de réalisation avantageux de l'invention, la liaison de section importante entre le coussin de suspension et la première chambre peut être ajustée de manière à produire néanmoins un effet d'amortissement en cas de variation brutale de volume du coussin de suspension et la première chambre peut présenter un volume minimal apte à jouer le rôle de réservoir additionnel pour le coussin de suspension.

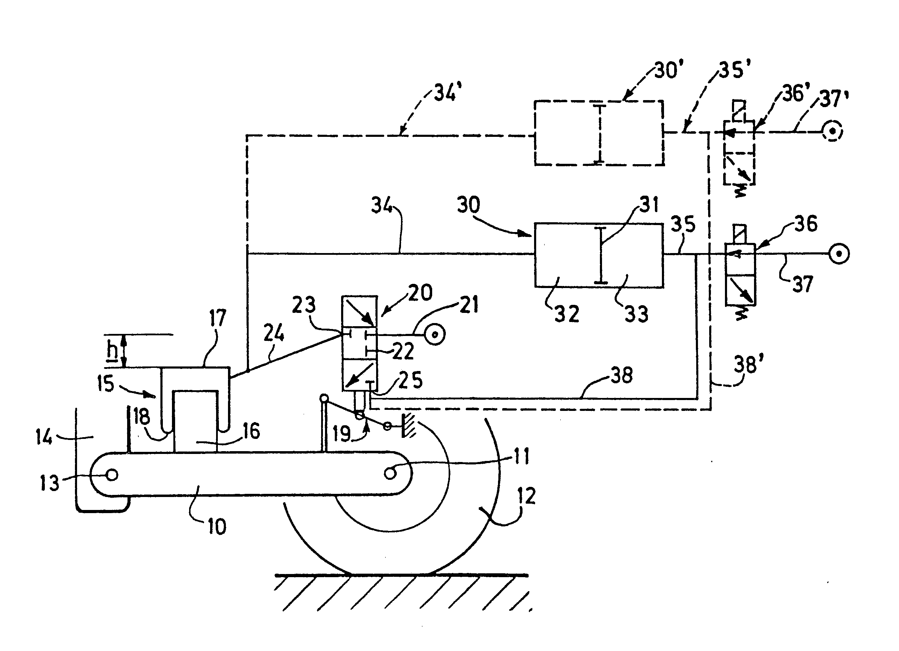

Les caractésistiques et avantages de l'invention ressortiront d'ailleurs mieux de la description suivante, donnée uniquement à titre d'exemple, en référence à la figure unique du dessin annexé qui illustre très schématiquement une forme de réalisation du dispositif selon l'invention.

Le dispositif selon l'invention, dans la forme de réalisation choisie et représentée à la figure unique est appliqué à un véhicule automobile industriel et comporte pour chaque roue (ou ensemble de roue du véhicule) un bras de suspension 10 (ou un essieu), dont une extrémité reçoit l'axe 11 de la roue 12 et dont l'autre extrémité est articulée en 13 au châssis 14 du véhicule (non représenté) autour d'un axe parallèle à celui de la roue; le châssis 14 repose sur ledit bras 10 par l'intermédiaire d'un coussin pneumatique 15. Dans certains dispositions de suspension, un ressort métallique supplémentaire peut être utilisé, placé entre le bras 10 et le châssis.

Le coussin 15 consiste essentiellement en un piston 16 (ici solidaire du bras), mobile dans une enveloppe 17 formant cylindre (fixée au châssis), des moyens d'étanchéité mobiles sous forme d'un soufflet 18 étant prévus entre piston et cylindre. La suspension comporte également une valve de nivellement à décalage de point neutre 20 interne ou externe, fonctionnant par translation ou rotation du corps de valve, ou par modification de la longueur de la tige d'actionnement, cette valve 20 étant commandée par une tringlerie 19, articulée entre le châssis et le bras de suspension 10. La valve 20 est alimentée en 21 par la source d'air comprimé du véhicule (non représentée) et présente un orifice d'échappement 22 et un orifice d'utilisation 23 relié par une canalisation 24 à l'intérieur du coussin 15. Elle est en outre munie d'un orifice 25 de commande de décalage de point neutre.

Cette valve 20, de manière connue, assure en permanence le réglage de la hauteur du coussin par alimentation de ce coussin en air, ou mise à l'échappement. Le débit d'air comprimé qu'elle peut laisser transiter à l'admission et respectivement à l'échappement est de préférence ajusté, par des étranglements respectifs à l'admission et à l'échappement, au minimum compatible avec la régulation de hauteur nécessaire au cours du roulage.

La suspension ainsi réalisée et par ailleurs connue en soi, est complétée selon l'invention, par un réservoir 30 comportant un corps cylindrique dans lequel est disposé une cloison mobile 31 divisant ce corps en deux chambres 32 et 33, sans communication entre elles. La chambre 32 est reliée à l'intérieur du coussin 15 par une tuyauterie 34 de relativement forte section, compatible avec les débits d'air importants à faire transiter entre la chambre 32 et le coussin 15.

Le réservoir 30 à cloison mobile peut être réalisé par exemple au moyen d'un vérin pneumatique dont le piston sert de cloison mobile et où, le cas échéant, la tige a été supprimée et le palier de tige remplacé par un couvercle fermé. Son volume est défini de telle sorte que la course du piston (ou cloison mobile 31) corresponde au balayage d'un volume propre à assurer au niveau du coussin de suspension 15 une variante de hauteur $\underline{h}$ désirée entre deux positions de nivellement, en l'absence de toute admission d'air ou échappement d'air par la valve de nivellement 20. La cloison mobile 31 peut bien entendu également être constituée par une membrane souple qui présente en général un plus grand encombrement diamétral et une meilleure étanchéité.

Pour le déplacement de la cloison mobile 31, la seconde chambre 33 du réservoir 30 est reliée par une canalisation 35 à la sortie d'un distributeur 36 alimenté en 37 par la source d'air comprimé du véhicule. Ce distributeur est adapté à mettre la chambre 33 en relation soit avec cette source d'air comprimé soit avec l'atmosphère ou l'échappement.

Par ailleurs, la sortie du distributeur 36 est reliée par une canalisation 38 à l'orifice 25 de décalage de point neutre de la valve de nivellement 20.

Le fonctionnement du dispositif selon l'invention est le suivant:

Lorsque le conducteur du véhicule désire abaisser rapidement l'assiette du véhicule en position basse correspondant à l'arrêt-voyageurs, il provoque la mise à l'échappement de la chambre 33 du réservoir par la commande du distributeur 36 qui permet la vidange de cette chambre à l'atmosphère. L'air sous pression du coussin 15, s'échappant par la tuyauterie 34, remplit la chambre 32 du réservoir 30, dont la cloison mobile 31 se déplace jusqu'à fin de course en abaissant ainsi considérablement la pression de suspension régnant dans le coussin 15. Le châssis du véhicule s'abaisse rapidement de la hauteur $\underline{h}$, fonction du rapport entre le volume du coussin 15 et du volume du réservoir 30.

Simultanément, la commande du distributeur 36 actionne (par la canalisation 38) le dispositif de décalage de point neutre de la valve 20, pour assurer la régulation de la suspension autour d'une position basse de suspension.

Pour faire remonter l'assiette du véhicule en position normale de roulage, par commande inverse du distributeur 36, de l'air sous pression est envoyé dans la chambre 33 du réservoir. L'air contenu dans la chambre 32 est refoulé vers le coussin 15 ce qui augmente sa pression et par voie de conséquence sa hauteur de $\underline{h}$, tandis que le point neutre de la valve de nivellement 20 est ramené au réglage correspondant à la position haute de suspension correspondante, par actionnement du dispositif de décalage de ce point neutre par la commande du distributeur 36, via la canalisation 38.

Grâce au dispositif qui vient d'être décrit, il est donc possible de réaliser très rapidement le passage d'une position haute de la suspension à une position basse, et vice versa, la valve de nivellement recevant simultanément le signal de réglage de point neutre assurant une régulation de la hauteur de la suspension autour de chacune de ces positions.

Au cours de ces réglages rapides de l'assiette de la suspension pneumatique, pratiquement aucun débit d'air comprimé ne transite par la valve de nivellement 20 qui présente par ailleurs, comme on l'a mentionné précédemment, une faible capacité de débit à l'admission et à l'échappement et qui doit en général être alimentée en air sec et filtré pour éviter la dégradation du circuit et des chambres de suspension pneumatiques par des condensations éventuelles. Dans le dispositif selon l'invention, il est possible pour économiser l'air sec relativement onéreux, d'utiliser de l'air comprimé ordinaire pour alimenter le distributeur 36.

La chambre 32 peut présenter un volume minimal non négligeable et apte à jouer le rôle d'un réservoir additionnel pour le coussin de suspension 15 pendant la marche normale du véhicule, ce réservoir additionnel étant agrandi en position basse de la suspension du véhicule. La canalisation 34 présente une perte de charge faible permettant des échanges rapides (en quelques secondes) d'air comprimé entre la chambre 32 (réduite à son volume minimal ou non) et l'intérieur du coussin de suspension 15. Cette perte de charge faible est néanmoins capable de provoquer un effet d'amortissement en cas de variation brutale du volume intérieur du coussin pneumatique 15 par suite d'un déplacement relatif de l'enveloppe 17 et du piston 16 consécutif à un cahot ou à un choc sur la suspension du véhicule.

Pour l'équipement d'un véhicule selon l'invention, on peut prévoir pour chaque coussin de suspension 15 un ensemble de valve de nivellement 20, de réservoir 30 et de distributeur 36 avec des valves de sécurité (non représentées ) pour parer à l'éclatement d'un coussin de suspension. On peut également prévoir plusieurs coussins de suspension (de préférence symétriquement disposés par rapport à l'axe de la roue ou du groupe de roues auxquels ils se rapportent) pour une même roue ou un même groupe de roues ou un même essieu et qui sont simultanément reliés à un même ensemble de valve de nivellement 20, de réservoir 30 et de distributeur 36.

Pour certaines applications particulières, il peut être nécessaire de réaliser plus de deux positions de nivellement: dans ce cas, selon l'invention, on met en place plus d'un réservoir à cloison mobile tel que 30, le mouvement de chaque cloison mobile étant commandé de façon indépendante.

Une telle disposition est représentée en traits interrompus sur la figure unique, les éléments supplémentaires recevant la même référence numérique que leurs homologues déjà décrits, affectée de l'indice prime.

**Revendications**

1. Dispositif de changement de position d'assiette pour véhicule à suspension au moins partiellement pneumatique, cette suspension comportant au moins un coussin de suspension (15) alimenté en air comprimé par l'intermédiaire d'une valve de nivellement (20) adaptée à réguler la position d'assiette du véhicule autour d'un point neutre et comprenant un réservoir (30) séparé en deux chambres (32, 33) par une cloison mobile (31), et dont la première chambre (32) est reliée audit coussin (15), caractérisé en ce que la deuxième chambre (33) est reliée à un distributeur (36) adapté à la mettre en communication, soit avec une source d'air comprimé (37) dont la pression est suffisante pour faire réduire la première chambre (32) à un volume minimal par déplacement de la cloison mobile (31), le coussin de suspension (15) présentant alors un volume correspondant à la position normale de roulage du véhicule, soit avec l'atmosphère ou l'échappement, l'air contenu dans le coussin (15) transitant alors en partie vers la première chambre (32) et repoussant la cloison mobile (31) en sens contraire jusqu'en fin de course et en ce que la valve de nivellement comporte un dispositif (25) de décalage de point neutre relié à la deuxième chambre (33) par une canalisation (38) de manière que la mise en pression de la deuxième chambre (33) corresponde à un premier réglage du point neutre pour la position de roulage et que sa mise à l'échappement corresponde à un second réglage du point neutre pour la position basse ou d'arrêt qui est obtenue par l'abaissement de la pression consécutif au déplacement de la cloison mobile (31) pour augmenter le volume de la première chambre (32).

2. Dispositif selon la revendication 1, caractérisé en ce qu'il comporte au moins un autre réservoir (30') à cloison mobile (31'), analogue au premier cité et relié de même directement au coussin de suspension (15) et à une source d'air comprimé par un autre distributeur (36'), pour déplacer ledit coussin entre la position de roulage et une autre position de nivellement de suspension et en ce que le dispositif (25) de décalage de point neutre est relié à la deuxième chambre dudit autre réservoir (30') par une canalisation (38') de façon que la mise en pression de ladite deuxième chambre corresponde à un troisième réglage de point neutre obtenu à la suite de la réduction de volume de la première chambre dudit autre réservoir (30') tandis que la mise à l'échappement de ladite deuxième chambre correspond au réglage de la suspension par le seul réservoir (30).

3. Dispositif selon l'lune des revendications 1 ou 2, caractérisé en ce que la valve de nivellement (20) est apte à laisser transiter à l'admission et respectivement à l'échappement un débit d'air comprimé qui est ajusté au voisinage du minimum compatible avec la régulation de hauteur nécessaire au cours du roulage du véhicule tandis que la liaison (canalisation 34, 34') entre le coussin de suspension (15) et la première chambre (32) est réalisée par un passage de section importante compatible avec les débits à laisser transiter entre la première chambre (32) et le coussin de suspension (15).

4. Dispositif selon la revendication 3, caractérisé en ce que la liaison (34, 34') de section importante entre le coussin de suspension (15) et la première chambre (32) est ajusté de manière à produire néanmoins un effet d'amortissement en cas de variation brutale de volume du coussin de suspension (15).

5. Dispositif selon l'une des revendications 1 à 4, caractérisé en ce que la première chambre (32) présente un volume minimal apte à jouer le rôle de réservoir additionnel pour le coussin de suspension (15).

**Patentansprüche**

1. Höhenreguliervorrichtung für Fahrzeuge mit wenigstens teilweise pneumatischer Federung, wobei diese Federung wenigstens ein Luftpolster (15) aufweist, das mittels eines Niveau-Ventils (20) mit komprimierter Luft versorgt wird um so die Höheneinstellung des Fahrzeuges um einen neutralen Punkt herum zu regulieren und die einen Behälter (30) aufweist, der durch eine bewegliche Wand (31) in zwei Kammern (32, 33) unterteilt ist, wobei die erste Kammer (32) mit dem Polster (15) verbunden ist, dadurch gekennzeichnet, dass die zweite Kammer (33) mit einem Verteiler (36) verbunden ist, um sie entweder mit der Quelle für komprimierte Luft (37) zu verbinden, deren Druck ausreicht, um die erste Kammer (32) durch Verschiebung der beweglichen Wand (31) auf ein Minimalvolumen zu reduzieren, so dass das Luftpolster (15) ein Volumen aufweist, das der Normalstellung für die Fahrzeugfahrt entspricht oder mit der Atmosphäre oder dem Auslass zu verbinden, so dass die im Polster (15) enthaltene Luft teilweise in die erste Kammer (32) strömt und die bewegliche Wand (31) in Gegenrichtung bis zum Anschlag verschiebt und dass das Niveau-Ventil eine Vorrichtung (25) zur Verschiebung des neutralen Punktes aufweist, die mit der zweiten Kammer (33) über eine Leitung (38) derart verbunden ist, dass die Druckaufnahme der zweiten Kammer (33) einer ersten Regulierung des neutralen Punktes für die Fahrtstellung entspricht und dass ihr Anschluss an den Auslass einer zweiten Regulierung des neutralen Punktes entspricht für die abgesenkte oder Haltestellung, die durch Ablassen des Drucks im Anschluss an eine Verschiebung der bewegliche Wand (31) erzielt wird, um das Volumen der ersten Kammer (32) zu erhöhen.

2. Vorrichtung nach Anspruch 1, dadurch gekennzeichnet, dass sie wenigstens einen weiteren Behälter (30') mit beweglicher Trennwand (31') aufweist, ähnlich den oben Genannten, und der ebenfalls direkt mit dem Luftpolster (15) verbunden ist sowie mit einer Quelle für komprimierte Luft über einen anderen Verteiler (36'), um das Polster zwischen einer Fahrtstellung und einer anderen Höhenstellung zu verschieben und dass die Vorrichtung (25) zur Verschiebung des neutralen Punktes mit der zweiten Kammer des anderen Behälters (30') über eine Leitung (38') derart verbunden ist, dass die Druckbeaufschlagung der zweiten Kammer einer dritten Regulierung des neutralen Punktes entspricht im Anschluss an eine Verringerung des Volumens der ersten Kammer des anderen Behälters (30'), während der Anschluss an den Auslass der zweiten Kammer einer Regulierung der Federung durch den alleinigen Behälter (30) entspricht.

3. Vorrichtung nach einem der Ansprüche 1 oder 2, dadurch gekennzeichnet, dass das Niveau-Ventil (20) in der Lage ist, eine komprimierte Luftmenge, die ungefähr dem Minimum entspricht, das zur Höhenregulierung während der Fahrzeugfahrt erforderlich ist, dem Einlass bzw. dem Auslass zuzuführen, während die Verbindung (Leitung 34, 34') zwischen dem Luftpolster (15) und der ersten Kammer (32) durch einen Durchlass gebildet wird mit grossem Querschnitt, entsprechend den Luftmengen, die zwischen der ersten Kammer (32) und dem Luftpolster (15) durchströmen.

4. Vorrichtung nach Anspruch 3, dadurch gekennzeichnet, dass die Verbindung (34, 34') mit grossem Querschnitt zwischen dem Luftpolster (15) und der ersten Kammer (32) derart einstellbar ist, dass ein Dämpfungseffekt erzielt wird im Falle einer plötzlichen Volumenänderung des Luftpolsters (15).

5. Vorrichtung nach einem der Ansprüche 1 bis 4, dadurch gekennzeichnet, dass die erste Kammer (32) ein Minimalvolumen aufweist, das in der Lage ist, die Rolle eines zusätzlichen Behälters für das Luftkissen (15) zu übernehmen.

**Claims**

1. A trim position changing apparatus for a vehicle with at least partially pneumatic suspension, said suspension comprising at least one suspension cushion (15) which is supplied with compressed air by way of a levelling valve (20) adapted to regulate the trim position of the vehicle about a neutral point and comprising a reservoir (30) which is divided into two chambers (32, 33) by a movable partition (31), of which the first chamber (32) is connected to said cushion (15), characterised in that the second chamber (33) is connected to a distributor (36) adapted to communicate it either with a compressed air source (37) whose pressure is sufficient to reduce the first chamber (32) to a minimum volume by displacement of the movable partition (31), the suspension cushion (15) then being of a volume corresponding to the normal position of travel of the vehicle, or with the atmosphere or the exhaust, the air contained in the cushion (15) then partly passing towards the first chamber (32) and urging the movable partition (31) in the opposite direction to the end of its travel, and that the levelling valve comprises a neutral point shifting means (25) connected to the second chamber (33) by means of conduit (38) in such a way that pressurisation of the second chamber (33) corresponds to a first setting of the neutral point for the travel position and that the communication thereof with the exhaust corresponds to a second setting of the neutral point for the low or stop position which is obtained by the reduction in the pressure following the displacement of the movable partition (31) to increase the volume of the first chamber (32).

2. Apparatus according to claim 1 characterised in that it comprises at least one other reservoir (30') with movable partition (31') which is similar to the first mentioned reservoir and which is likewise directly connected to the suspension cushion (15) and to a compressed air source by another distributor (36') for displacing said cushion between the travel position and another suspension levelling position, and that the neutral point shifting means (25) is connected to the second chamber of said other reservoir (30') by way of a conduit (38') in such a way that pressurisation of said second chamber corresponds to a third neutral point setting obtained following the reduction in volume of the first chamber of said other reservoir (30') while the communication with the exhaust of said second chamber corresponds to the setting of the suspension by means of the single reservoir (30).

3. Apparatus according to one of claims 1 and 2 characterised in that the levelling valve (20) is capable of passing to the intake and to the exhaust respectively a flow of compressed air which is adjusted to close to the minimum compatible with the height regulation necessary in the course of travel of the vehicle while the communication (conduit 34, 34') between the suspension cushion (15) and the first chamber (32) is provided by a passage of substantial section compatible with the flows to be passed between the first chamber (32) and the suspension cushion (15).

4. Apparatus according to claim 3 characterised in that the communication (34, 34') of substantial section between the suspension cushion (15) and the first chamber (32) is adjusted in such a way as nonetheless to produce a damping effect in the event of an abrupt variation in the volume of the suspension cushion (15).

5. Apparatus according to one of claims 1 to 4 characterised in that the first chamber is of a minimum volume capable of performing the function of an additional reservoir for the suspension cushion (15).